Europäisches Patentamt

European Patent Office

Office européen des brevets

(19)

(11) Veröffentlichungsnummer: **0 238 776
B1**

(12) # EUROPÄISCHE PATENTSCHRIFT

(45) Veröffentlichungstag der Patentschrift:
22.11.90

(51) Int. Cl.⁵: **F24D 19/10**, F24D 11/00

(21) Anmeldenummer: **86730213.5**

(22) Anmeldetag: **19.12.86**

(54) Verfahren zum Betrieb einer Heizungsanlage und Wärmespeicher für diese Heizungsanlage.

(30) Priorität: **21.02.86 DE 3606072**

(43) Veröffentlichungstag der Anmeldung:
**30.09.87 Patentblatt 87/40**

(45) Bekanntmachung des Hinweises auf die Patenterteilung:
**22.11.90 Patentblatt 90/47**

(84) Benannte Vertragsstaaten:
**AT BE CH DE ES FR GB IT LI LU NL SE**

(56) Entgegenhaltungen:
**EP-A- 0 045 481
EP-A- 0 122 475
BE-A- 515 441
FR-A- 2 533 538**

(73) Patentinhaber: **MANNESMANN Aktiengesellschaft,
Mannesmannufer 2, D-4000 Düsseldorf 1(DE)**

(72) Erfinder: **Kämereit, Wilhelm, Bingenerweg 7,
D-4000 Düsseldorf(DE)**

(74) Vertreter: **Meissner, Peter E., Dipl.-Ing. et al,
Patentanwaltsbüro Meissner & Meissner,
Herbertstrasse 22, D-1000 Berlin 33(DE)**

**Beschreibung**

Die Erfindung betrifft ein Verfahren zum Betrieb einer Heizungsanlage gemäß dem Oberbegriff des Patentanspruchs 1 und einen Wärmespeicher für eine Heizungsanlage zur Durchführung dieses Verfahrens.

Da sich die Kosten für Primärenergie in den letzten Jahren stark erhöht haben, ist man zunehmend bestrebt; die in einem Energieträger vorhandene Energie möglichst optimal auszunutzen. Dies gilt nicht nur für die Durchführung technischer Prozesse wie die Erzeugung von elektrischem Strom oder das Betreiben von Verbrennungskraftmaschinen oder von verfahrenstechnischen Anlagen, sondern auch für die Beheizung von Gebäuden jedweder Art. Der weitaus größte Teil der Gebäudeheizung wird durch den Einsatz von Heizöl, Erdgas oder Festbrennstoffen abgedeckt. Es ist bekannt, daß in verbrennungstechnischer Hinsicht eine optimale Energieausnutzung dann möglich ist, wenn der Brenner einer Heizungsanlage möglichst gleichmäßig betrieben werden kann. Dies bedeutet, daß auf jeden Fall häufiges Ein- und Ausschalten des Brenners zu vermeiden ist. Dieser Forderung steht jedoch die Tatsache entgegen, daß der Wärmebedarf für ein Gebäude über das Jahr gesehen stark unterschiedlich ist. Bei einem Wohngebäude wird beispielsweise in der Übergangzeit nur wenig Heizenergie benötigt, so daß die Kapazität des Brenners, die nach dem kältesten zu erwartenden Tag im Jahr ausgelegt ist, in dieser Zeit nur zu einem geringen Bruchteil ausgenutzt wird. Lediglich in der kältesten Zeit des Jahres, die allerdings nur wenige Tage in der Regel andauert, weist der Brenner lange Einschaltzeiten auf und läuft mit einem guten Wirkungsgrad.

In der überwiegenden Zeit des Jahres, in der ein mäßiger bis mittlerer Heizenergiebedarf besteht, unterliegt der Brenner an konventionellen Heizungsanlagen einer Vielzahl von Ein- und Ausschaltvorgängen. Dies ist eine Folge davon, daß herkömmliche Heizungsanlagen in der Regel mit vergleichsweise klein dimensionierten Wärmespeichern ausgestattet sind, weil die durch Abstrahlung bewirkten Wärmeverluste möglichst gering gehalten werden sollen. Da eine wirtschaftliche Speicherung der erzeugten Heizungswärme über längere Zeiträume nicht möglich war, hat man den verbrennungstechnisch ungünstigen Brennerbetrieb mit häufigen Ein- und Ausschaltvorgängen (Anfahrverluste) bewußt in Kauf genommen.

Aus der BE-A 515 441 ist eine Heizungsanlage im Sinne der Merkmale des Oberbegriffs des Patentanspruchs 1 bekannt, wobei dort das Heizmedium auf 90°C augeheizt wird. Ein direkter Einfluß auf die Zahl der Einschaltvorgänge ergibt sich hieraus aber nicht.

Aufgabe der Erfindung ist es, ein Verfahren zum Betrieb einer Heizungsanlage anzugeben, bei dem auch in Zeiten mit deutlich unter der Kapazität des Brenners bzw. einer sonstigen Wärmequelle zur Aufheizung des in der Heizungsanlage verwendeten Heizmediums (in der Regel Wasser) liegenden Wärmebedarf die Zahl der Einschaltvorgänge der Wärmequelle sehr klein gehalten wird, d.h. die Einschaltintervalle gegenüber herkömmlichen Betriebsweisen jeweils erheblich verlängert sind. Dabei sollen die Abstrahlungsverluste während der Stillstandszeiten der Wärmequelle so gering gehalten werden, daß insgesamt eine bessere Energieausnutzung bzw. eine höhere Wirtschaftlichkeit bei der Beheizung sichergestellt sind. Eine weitere Aufgabe besteht darin, einen Wärmespeicher für eine Heizungsanlage zur Durchführung des erfindungsgemäßen Verfahrens anzugeben, der möglichst einfach aufgebaut und damit kostengünstig herstellbar ist.

Gelöst wird diese Aufgabe erfindungsgemäß durch ein Verfahren mit den Merkmalen des Patentanspruchs 1, dessen vorteilhafte Weiterbildungen in den Unteransprüchen 2 - 6 angegeben sind. Ein erfindungsgemäßer Wärmespeicher für eine Anlage zur Durchführung dieses Verfahrens ist im Anspruch 7 gekennzeichnet und in den Unteransprüchen 8 - 17 in vorteilhafter Weise ausgestaltet.

Ein wesentlicher Gedanke der Erfindung besteht darin, in der Heizungsanlage einen Wärmespeicher zu verwenden, dessen Speichervolumen gegenüber vergleichbaren herkömmlichen Anlagen erheblich vergrößert ist. Dadurch wird erreicht, daß beispielsweise in Zeiten mit mäßigem bis mittlerem Wärmebedarf der Brenner trotz seiner großen Heizleistung, die regelmäßig für den Wärmebedarf am kältesten Tag ausgelegt ist, für eine relativ lange Dauer eingeschaltet bleiben und damit optimal arbeiten kann, bis der Wärmespeicher wieder voll aufgeladen ist. Das bedeutet ein entsprechende Verminderung der Zahl der Einschaltvorgänge, die stets mit unvermeidlichen Anfahrverlusten verbunden sind. Damit die durch die Brenneroptimierung eingesparte Energie nicht in Form von Abstrahlungsverlusten des Wärmespeichers wieder eingebüßt wird, ist dafür gesorgt, daß der Wärmespeicher mit einer sehr guten Wärmeisolierung (z.B. 10 cm dicke PU-Schaumisolierung) ausgestattet ist, die im Stillstand Temperaturverluste von maximal 2 K pro 24 h, vorzugsweise nur maximal 1,5 K pro 24 h sicherstellt. Ein weiteres besonders wesentliches Merkmal der Erfindung ist, daß der Wärmespeicher als Schichtwärmespeicher betrieben wird, wie er im Prinzip beispielsweise aus der EP 00 45 481 für die Speicherung von Niedertemperaturwärme in Sonnekollektor- oder Wärmepumpen-Anlagen bekannt ist, wo die Temperaturschichtung durch eine Zwangsführung des Heizmediums in kanalartigen bzw. trennwandartigen Einbauten innerhalb des Wärmespeichers sichergestellt wird.

Dies führt dazu, daß eine Vermischung des abgekühlten Heizmediums aus dem Rücklauf des Wärmeverbrauchskreislaufs mit dem noch warmen Heizmedium im Wärmespeicher weitestgehend unterbleibt, so daß für den Vorlauf des Wärmeverbrauchskreislaufs bis kurz vor der maximal zulässigen Wärmeentladung des Wärmespeichers immer noch etwa gleich hoch temperiertes Heizmedium zur Verfügung steht. Im Gegensatz zum Stand der Technik wird die Temperaturschichtung erfindungsgemäß jedoch nicht durch kanalartige oder trennwandartige Einbauten sichergestellt, sondern in erster Linie dadurch, daß der Rücklauf des Wärmeverbrauchs-kreislaufs mit stark reduzierter Strömungsge-schwindigkeit (z.B. infolge einer diffusorartigen Erweiterung der Rücklaufleitung) erfolgt, das abgekühlte Heizmedium also in beruhigter Form in den Wärmespeicher eingeleitet wird, so daß sich keine wesentlichen Verwirbelungen ausbilden können, die eine Vermischung von abgekühltem und noch war-mem Heizmedium bewirken würden. In Einzelfällen kann es zweckmäßig sein, in der Nähe dieser Rücklaufeinspeisung eine beispielsweise als Siebboden ausgebildete oder mit Strömungsleitblechen versehene durchlässige Vorrichtung vorzusehen, die ggf. doch entstandene Wirbel auf den untersten, d.h. den am weitesten abgekühlten Teil des Wärmespeichers beschränkt.

Da der Wärmespeicher in jedem Fall nur für eine Temperatur unterhalb der Siedetemperatur des Heizmediums ausgelegt sein muß und er vorzugsweise als zylindrischer Behälter gestaltet ist und aufwendige Einbauten zur Aufrechterhaltung der erwünschten Temperaturschichtung nicht erforderlich sind, ist eine kostengünstige Herstellung des Wärmespeichers möglich.

Der Betrieb der Heizungsanlage ist erfindungsgemäß so angelegt, daß während der Wärmespeicherbeladung, d.h. in der Phase der Aufheizung pro Zeiteinheit gemessen am Speicherinhalt große Wassermengen im Aufheizkreislauf umgewälzt werden, wobei in jedem Umlauf relativ geringe Temperaturzuwächse auftreten. Die starke Umwälzung führt während der Ladephase zu erheblichen Ver-wirbelungen mit entsprechendem Temperaturaus-gleich, so daß am Ende der Ladephase praktisch im gesamten Wärmespeicher die gleiche Temperatur vorliegt. Danach klingen die Verwirbelungen rasch ab, da in der Entladephase pro Zeiteinheit vergleichsweise geringe Wassermengen aus dem Wärmespeicher entnommen und in den Wärmever-brauchskreislauf eingespeist werden. Der Rück-lauf des Wärmeverbrauchskreislaufs erfolgt daher gleichfalls mit diesen geringen Wassermengen und einer stark reduzierten Strömungsgeschwindigkeit. Der Einspeisungsbedarf in den Wärmeverbrauchskreislauf ist auch deswegen gering, weil die Einspeisung stets mit hohem Temperaturniveau erfolgen kann, während das rücklaufende Heizmedium stark abgekühlt wird, so daß eine große Temperaturdifferenz (im Vergleich zur Temperaturdifferenz pro Umwälzung im Aufheizkreislauf) nutzbar ist.

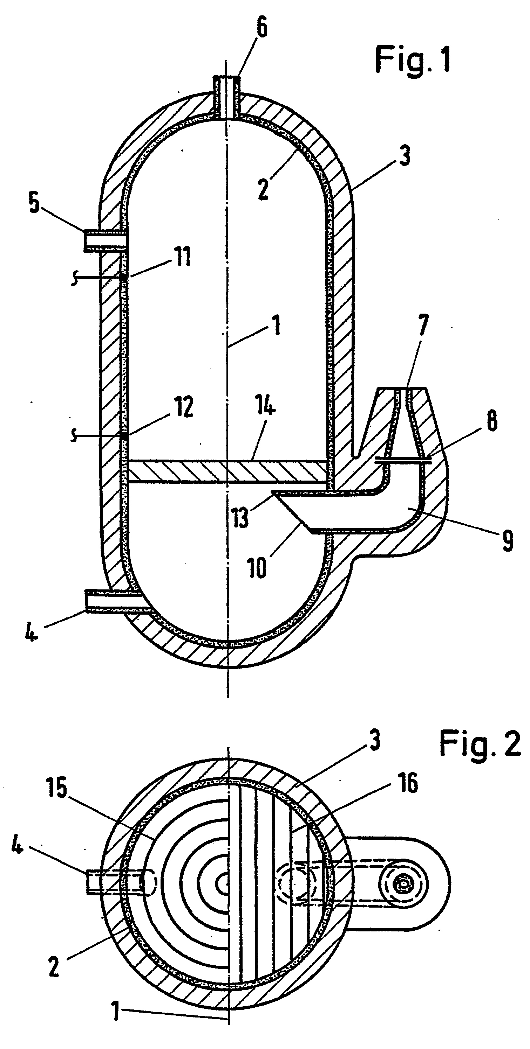

Im folgenden wird die Erfindung anhand des in Fi-gur 1 in Längsschnitt und in Figur 2 in Querschnitt gezeigten Wärmespeichers für eine Heizungsanlage zur Durchführung des erfindungsgemäßen Verfahrens näher erläutert.

Der Wärmespeicher 1 ist als im wesentlich zylindrisch geformter Behälter 2 ausgebildet. Er steht im Betriebsfall aufrecht und weist eine Länge auf, die mindestens doppelt so groß ist wie sein Durchmesser.

Die Wand des Behälters 2 ist außen mit einer 10 cm dicken Isolierung aus PU-Schaum umgeben, die einen maximalen Temperaturverlust von 1,5 K pro 24 h im Stillstand gewährleistet. Die Aufheizung des im Inneren des Wärmespeichers befindlichen Heizungswassers erfolgt z.B. mit Hilfe eines Ölbrenners in einem nicht dargestellten Aufheizkreislauf, dessen Vorlauf mit dem Anschlußstutzen 4 in der Nähe des tiefsten Punktes des Wärmespeichers 1 und dessen Rücklauf mit dem Anschlußstutzen 5 verbunden ist, der in etwa 85 % der Höhe des Wärmespeichers 1 angeordnet ist. Der Vorlauf für den nicht dargestellten Wärmeverbrauchskreislauf ist an der höchsten Stelle des Wärmespeichers 1 an den Stutzen 6 angeschlossen. Der Rücklauf für das abgekühlte Heizungswasser ist mit dem Stutzen 7 verbunden. Dieser weist eine sich zum Inneren des Wärmespeichers 1 hin öffnende diffusorartige Erweiterung 8 auf, so daß im Eintrittsbereich 9 in den Wärmespeicher 1 eine erhebliche Vergrößerung der Strömungsquerschnittsfläche auf etwa den 20-fachen Betrag im Vergleich zum übrigen Lei-tungsquerschnitt der Rücklaufleitung vorliegt. Hier-durch wird die Strömungsgeschwindigkeit des in den Wärmespeicher 1 zurückgeleiteten abgekühlten Heizungswassers entsprechend drastisch reduziert, so daß keine bedeutsamen Verwirbelungen und Vermischungen von kaltem und warmem Heizungswasser eintreten. Um den Effekt der Wirbelbildung in jedem Fall auf den untersten, also den kältesten Teil des Wärmespeichers zu beschränken, ist einerseits die Mündung 10 des Anschlußstutzens 7 in der Weise schräg angeschnitten, daß der obere Teil 13 des Rohrmantels weiter in das Innere des Wärmespeichers 1 hineinragt als der untere Teil.

Andererseits ist ein wasserdurchlässiger Boden 14 dicht oberhalb der Mündung 10 des Anschlußstutzens 7 in den Wärmespeicher 1 eingezogen, der, wie in Figur 2 alternativ dargestellt ist, z.B. mit konzentrisch oder sehnenförmig über den Behälterquerschnitt sich erstreckenden Leitblechen 15 bzw. 16 ausgestattet sein kann. Im Falle der sehnenförmig verlaufenden Leitbleche 16 sind diese vorzugsweise senkrecht zur Einströmrichtung des Rücklaufes gestellt. In der Regel können derartige Zusatzmaßnahmen allerdings unterbleiben, ohne daß dadurch die Temperaturschichtung des Wärmespeichers 1 gestört würde. Der Wärmespeicher 1 ist mit zwei Thermostaten 11, 12 ausgestattet, von denen der Thermostat 11, der dicht unterhalb des Anschlußstutzens 5 positioniert ist, bei Unterschreiten einer eingestellten Temperatur an dieser Stelle des Wärmespeichers 1 die Einschaltung des Aufheizkreislaufs für das Heizungswasser bewirkt. Der Thermostat 12 ist dicht oberhalb des Bodens 14 eingebaut und bewirkt die Ausschaltung des Aufheizkreislaufs, sobald der Wärmespeicher 1 seine Soll-Höchsttemperatur erreicht hat, d.h. diese Temperatur an der Einbaustelle festgestellt wird.

Die Betriebsweise der Heizungsanlage ist z.B. wie folgt: Bei Einschalten der Heizungsanlage nach einer längeren Stillstandszeit wird über den Thermostat 11, dessen Sockeltemperatur auf ca. 60-65 Grad C eingestellt ist, der Aufheizkreislauf eingeschaltet. Infolge dessen wird das auf Raumtemperatur befindliche Heizungswasser mit relativ ho-her Strömungsgeschwindigkeit von der Umwälzpum-pe des Aufheizkreislaufs angesaugt, beim Durchgang durch den Heizkessel um etwa 10 K erwärmt und wieder mit hoher Strömungsgeschwindigkeit durch den Stutzen 5 in den Wärmespeicher 1 zurückgeleitet.

Dadurch tritt eine starke Verwirbelung mit dem in Wärmespeicher 1 befindlichen Heizungswasser und somit eine entsprechend erhöhte Mischtemperatur ein. Mit jeder vollständigen Umwälzung des Wärmespeicherinhalts im Aufheizkreislauf steigt die Heizungswassertemperatur um weitere 10 K an. Das gleichzeitige Laufen der Umwälzpumpe im Wärmeverbrauchskreislauf beeinträchtigt dabei diesen Aufheizprozeß nur unwesentlich, da die Wassermenge des Wärmeverbrauchskreislaufs nur z.B. 10 % des Volumens des Wärmespeichers 1 ausmacht. Sobald an der Einbaustelle des Ausschaltthermostats 12 die Soll-Höchsttemperatur von ca. 85 Grad C erreicht ist, wird der Aufheizkreislauf abgestellt. In diesem Augenblick liegt im weitaus größten Teil des Wärmespeichers 1 eine Temperatur von etwa 85 Grad C vor, die lediglich im untersten Bereich des Wärmespeichers 1 etwas unterschritten wird. Während dieser Aufheizphase hat der Ölbrenner des Aufheizkreislaufs unter gleichbleibenden günstigen Bedingungen arbeiten können. Nach dem Abschalten der Umwälzpumpe im Aufheizkreislauf kommt das im Wärmespeicher 1 befindliche Wasservolumen zur Ruhe. Über den Stutzen 6 wird während der jetzt beginnenden Entladung des Wärmespeichers 1 ca. 85 Grad C warmes Heizungswasser über ein Dreiwegemischventil in den Wärmeverbrauchskreislauf eingespeist. Wegen der relativ hohen Temperatur von etwa 85 Grad C wird in der Regel nur ein geringer Volumenstrom des warmen Heizungswassers aus dem Wärmespeicher 1 entnommen, während der größte Teil der Wassermenge in Wärmeverbrauchskreislauf mehrfach umläuft, bevor er in den Rücklauf zum Wärmespeicher 1 gelangt. Die Strömungsgeschwindigkeit im Austrittsbereich des Stutzens 6 kann daher niedrig gehalten werden. Dies gilt in noch wesentlich größerem Maße für die Eintrittszone des Rücklaufstutzens 7.

Durch die diffusorartige Erweiterung 8, deren Endquerschnittsfläche etwa dem zwanzigfachen Betrag der Rohrquerschnittsfläche der Rücklaufleitung entspricht und der bis zur Einmündungsstelle beibehalten wird, wird die Strömungsgeschwindigkeits an der Einmündungsstelle 10 entsprechend auf ein Zwangzigstel verringert. Hierdurch kommt es im unteren Bereich des Wärmespeichers 1 lediglich zu schwachen Wasserbewegungen, d.h. die Vermischung des zurücklaufenden abgekühlten Heizungswassers, das nur noch eine Temperatur von etwa 55 Grad C aufweist, tritt lediglich im unteren Bereich des Wärmespeichers 1 ein. Mit fortschreitender Entladung nimmt der Volumenanteil des abgekühlten Heizungswassers immer mehr zu, d.h. das kältere Wasser drückt das wärmere immer weiter nach oben, ohne sich mit diesem nennenswert zu vermischen. Die Temperaturschichtung im Wärmespeicher 1 bleibt also erhalten. Erst wenn das kältere Wasser das Niveau des Einschaltthermostates 11 erreicht hat, schaltet dieser aufgrund der jetzt unterschrittenen Sockeltemperatur von 60 Grad C an dieser Stelle wieder den Aufheizkreislauf ein. Während der langdauernden Entladung des Wärmespeichers 1, in der nur unwesentliche Wärmeverluste durch Abstrahlung eingetreten sind, konnte praktisch ständig Heizungswasser von etwa 85 Grad C an dem Anschlußstutzen 6 abgezogen werden. Mit der erneuten Einschaltung des Aufheizkreislaufs tritt im Wärmespeicher 1 wiederum eine starke Verwirbelung ein, allerdings mit jeweils bereits um 10 K höher temperiertem Heizungswasser (im Anfang also etwa 65 Grad C), so daß hinsichtlich der Wirksamkeit des Wärmeverbrauchskreislaufs keinerlei Störungen oder merkbare Beeinträchtigungen zu verzeichnen sind. Zumindest zu Beginn der Aufheizphase steht im obersten Bereich des Wärmespeichers 1 immer noch etwa 85 Grad C warmes Heizungswasser zur Verfügung.

Sobald infolge der Verwirbelung Heizungswasser mit geringerer Temperatur als 85 Grad C durch den Stutzen 6 abgezogen wird, wird lediglich das pro Zeiteinheit über das Dreiwegeventil des Wärmeverbrauchskreislaufs eingespeiste Heizungswasservolumen aus dem Wärmespeicher 1 und damit auch die Rücklaufwassermenge im Stutzen 7 entsprechend erhöht. Dadurch verringert sich die mittlere Verweilzeit des Heizungswassers im Wärmeverbrauchskreislauf. Wegen des großen aufzuheizenden Wasservolumens im Wärmespeicher 1 steht dem Brenner des Aufheizkreislaufs eine relativ lange Zeit für einen Betrieb unter günstigen Bedingungen zur Verfügung. Bei Erreichen der Soll-Höchsttemperatur am Abschaltthermostat 12 wird der Aufheizkreislauf wieder abgeschaltet, und der Entladezyklus beginnt erneut.

Insgesamt wird mit dem erfindungsgemäßen Verfahren, ohne daß es eines größeren anlagentechnischen Aufwandes bedarf, eine Arbeitsweise des Brenners des Aufheizkreislaufs unter energetischen Gesichtspunkten weitgehend optimalen Bedingungen ermöglicht. Dies bringt den weiteren Vorteil verringerter Umweltbelastungen mit sich, da eine drastische Reduzierung der Zahl der Einschaltvorgänge auch eine Minimierung des Schadstoffausstoßes bedeutet, der in der Anfahrphase vergleichsweise hoch ist. Der Einsatz des erfindungsgemäßen Wärmespeichers beschränkt sich jedoch nicht auf mit fossilen Energieträgern (Heizöl, Kohle, Erdgas) beheizten Wärmequellen des Aufheizkreislaufs. Es sind darüber hinaus auch Einsätze sinnvoll, bei dem z.B. elektrische Energie oder Fernwärme für die Aufheizung genutzt wird. Die guten Wärmespeichereigenschaften in einem Temperaturbereich, der deutlich über dem von energetisch ebenfalls günstigen Niedertemperaturkesseln liegt, ermöglichen dabei eine kostengünstige Ausnutzung dieser Energieträger z.B. durch Vermeidung von Spitzenlasten bzw. Ausnutzung eines hohen Temperaturgefälles zwischen der Vor- und Rücklaufleitung einer Fernwärmeversorgung.

**Patentansprüche**

1. Verfahren zum Betrieb einer Heizungsanlage mit einem Aufheizkreislauf für ein flüssiges Heizmedium, insbesondere Wasser, dessen Vorlauf im unteren und dessen Rücklauf im oberen Bereich eines aufrecht stehenden Wärmespeichers angeschlossen sind, und mit einem Wärmeverbrauchskreislauf für das Heizmedium, dessen Vorlauf im oberen und dessen Rücklauf im unteren Bereich des Wärmespeichers angeschlossen sind, wobei der Aufheiz- und der Wärmeverbrauchskreislauf im Wärmespeicher zueinander offen sind und die Aufheizung des Heizmediums, die auf eine Höchsttemperatur unterhalb des Siedepunktes begrenzt wird, in Abhängigkeit von dessen Temperatur gesteuert in Intervallen erfolgt und außerhalb der Aufheizintervalle im Inneren des Wärmespeichers eine Temperaturschichtung aufrechterhalten wird, dadurch gekennzeichnet, daß die im Wärmeverbrauchskreislauf umlaufende Heizmediummenge (Inhalt der Leitungen und der Heizkörper) auf maximal 20% der in dem Wärmespeicher befindlichen Heizmediummenge beschränkt wird, und daß das Heizmedium im Bereich der wärmsten Temperaturschicht nicht unter ca. 50 Grad C (Sockeltemperatur) abgekühlt wird, daß im Wärmeverbrauchskreislauf die Differenz zwischen der Vorlauftemperatur des aus dem Wärmespeicher austretenden warmen Heizmediums und der Rücklauftemperatur des in den Wärmespeicher zurückgeleiteten abgekühlten Heizmediums auf mindestens 20 K gehalten wird, daß im Aufheizkreislauf die Differenz zwischen der Rücklauftemperatur des in den Wärmespeicher eintretenden, erhitzten Heizmediums und der Vorlauftemperatur des aus dem Wärmespeicher austretenden abgekühlten Heizmediums auf maximal 20 K beschränkt wird und daß die Fließgeschwindigkeit des Heizmediums im Rücklauf des Wärmeverbrauchskreislauf im Bereich unmittelbar vor der Einleitung in den Wärmespeicher so weit herabgesetzt wird, daß ein Wert von 0,1 m/sec nicht überschritten wird.

2. Verfahren nach Anspruch 1, dadurch gekennzeichnet, daß die Heizmediummenge des Wärmeverbrauchskreislaufes auf maximal 10% der Heizmediummenge des Wärmespeichers beschränkt wird.

3. Verfahren nach einem der Ansprüche 1–2, dadurch gekennzeichnet, daß der Wärmespeicher im Bereich einer Höchsttemperatur von etwa 85 Grad C und einer Sockeltemperatur von etwa 60 Grad C betrieben wird.

4. Verfahren nach einem der Ansprüche 1–3, dadurch gekennzeichnet, daß die Temperaturdifferenz zwischen Vorlauf und Rücklauf des Wärmeverbrauchskreislaufs auf mindestens 30 K gehalten wird.

5. Verfahren nach einem der Ansprüche 1–4, dadurch gekennzeichnet, daß die Temperaturdifferenz zwischen Rücklauf und Vorlauf des Aufheizkreislaufs auf höchstens 10 K beschränkt wird.

6. Verfahren nach einem der Ansprüche 1–5, dadurch gekennzeichnet, daß die Fließgeschwindigkeit des Wärmeverbrauchskreislaufs vor der Einleitung in den Wärmespeicher auf höchstens 0,05 m/sec beschränkt wird.

7. Aufrechtstehender, wärmeisolierter Wärmespeicher für eine Heizungsanlage zur Durchführung des Verfahrens nach Anspruch 1, der in der oberen Hälfte einen Anschlußstutzen (5) für eine Rücklaufleitung eines Aufheizkreislaufs und einen Anschlußstutzen (6) für eine Vorlaufleitung eines Wärmeverbrauchskreislaufs sowie in der unteren Hälfte einen Anschlußstutzen (4) für die Vorlaufleitung des Aufheizkreislaufs und einen Anschlußstutzen (7) für die Rücklaufleitung des Wärmeverbrauchskreislaufs aufweist, wobei der Aufheiz- und der Wärmeverbrauchskreislauf im Wärmespeicher zueinander offen sind, und der mit mindestens einem Temperaturfühler ausgestattet ist, dadurch gekennzeichnet, daß seine Höhe mindestens so groß ist wie seine charakteristische Querabmessung (z.B. Durchmesser Diagonale), daß der Anschlußstutzen (7) für den Rücklauf des Wärmeverbrauchskreislaufs im Bereich (9) des Eintritts in den Wärmespeicher (1) eine gegenüber dem Eingang des Anschlußstutzen mindestens 15mal so große Querschnittsfläche aufweist, wobei der Querschnitt sich vor dem Eintritt in den Wärmespeicher (1) diffusorartig erweitert (8), daß die Wärmeisolierung (3) des Wärmespeichers. (1) in der Weise ausgelegt ist, daß die Stillstandsverluste maximal 2 K pro 24 h betragen, daß zwei Thermostate (11, 12,) vorgesehen sind, wobei der eine (11) im oberen Drittel des Wärmespeichers (1) angeordnet ist und die Einschaltung des Aufheizkreislaufs, bei Eintritt einer tiefstzulässigen Temperatur des Heizmediums bewirkt und der andere (12) im unteren Drittel des Wärmespeichers (1) angeordnet ist und die Ausschaltung des Aufheizkreislaufs bei Erreichen einer höchstzulässigen Temperatur des Heizmediums bewirkt.

8. Wärmespeicher nach Anspruch 7, dadurch gekennzeichnet, daß die Mündung (10) des Anschlußstutzens (7) in der Weise angeschrägt ist, daß der obere Bereich (13) des Rohrmantels des Anschlußstutzens (7) für den Rücklauf des Wärmeverbrauchskreislauf weiter in das Innere des Wärmespeichers (1) hineinragt als der untere.

9. Wärmespeicher nach einem der Ansprüche 7 oder 8, dadurch gekennzeichnet, daß der Anschlußstutzen (7) für den Rücklauf des Wärmeverbrauchskreislauf etwa in horizontaler Richtung in den Wärmespeicher (1) mündet.

10. Wärmespeicher nach einem der Ansprüche 7–9, dadurch gekennzeichnet, daß im unteren Bereich des Wärmespeichers (1) oberhalb der Mündung des Anschlußstutzens (7) für den Rücklauf des Wärmeverbrauchskreislauf eine als Siebboden oder Leitblechboden zur Strömungsberuhigung ausgebildete wasserdurchlässige Vorrichtung (14) vorgesehen ist.

11. Wärmespeicher nach einem der Ansprüche 7–10, dadurch gekennzeichnet, daß der Vorlaufstutzen (4) für den Aufheizkreislauf in der Nähe des tiefsten Punktes des Wärmespeichers (1) angeordnet ist.

12. Wärmespeicher nach einem der Ansprüche 7–11, dadurch gekennzeichnet, daß der Vorlaufstutzen (6) für den Wärmeverbrauchskreislauf in der Nähe des höchsten Punktes des Wärmespeichers (1) angeordnet ist.

13. Wärmespeicher nach einem der Ansprüche 10–12, dadurch gekennzeichnet, daß der Ausschaltthermostat (12) unmittelbar oberhalb der Strömungsberuhigungs-Vorrichtung (14) angeordnet ist.

14. Wärmespeicher nach einem der Ansprüche 7–13, dadurch gekennzeichnet, daß der Rücklauf (5) des Aufheizkreislaufs in einer Höhe von 75–90% der Höhe des Wärmespeichers (1) in den Wärmespeicher (1) mündet.

15. Wärmespeicher nach einem der Ansprüche 7–14, dadurch gekennzeichnet, daß der Einschaltthermostat (11) in einer Höhe von 75–90% der Höhe des Wärmespeichers (1) angeordnet ist.

16. Wärmespeicher nach einem der Ansprüche 7–15, dadurch gekennzeichnet, daß er als außen im wesentlichen zylindrischer Behälter (2) ausgebildet ist.

17. Wärmespeicher nach einem der Ansprüche 10–16, dadurch gekennzeichnet, daß die Strömungsberuhigungs-Vorrichtung (14) aus im axialen Querschnitt des Wärmespeichers (1) gesehen spiralförmig, konzentrisch (15) oder sehnenförmig (16) verlaufenden Leitblechen gebildet ist.

## Claims

1. Process for operating a heating installation with a heating circuit for a liquid heating medium, in particular water, the flow pipe of which is connected in the lower region and the return pipe of which is connected in the upper region of an upright heat accumulator, and with a heat consumption circuit for the heating medium, the flow pipe of which is connected in the upper region and the return pipe of which is connected in the lower region of the heat accumulator, with the heating circuit and the heat consumption circuit being open to each other in the heat accumulator and the heating of the heating medium, which is limited to a maximum temperature below the boiling point, taking place in intervals in controlled manner dependent on the temperature thereof, and a temperature stratification being maintained outside the heating intervals in the interior of the heat accumulator, characterised in that the quantity of heating medium (contents of the pipes and the heater) circulating in the heat consumption circuit is limited to a maximum of 20% of the quantity of heating medium in the heat accumulator, and that the heating medium in the region of the hottest temperature layer is not cooled to below about 50 degrees C (base temperature), that in the heat consumption circuit the difference between the flow pipe temperature of the hot heating medium emerging from the heat accumulator and the return pipe temperature of the cooled heating medium recycled into the heat accumulator is kept to at least 20 K, that in the heating circuit the difference between the return pipe temperature of the heated heating medium entering the heat accumulator and the flow pipe temperature of the cooled heating medium emerging from the heat accumulator is limited to a maximum of 20 K, and that the rate of flow of the heating medium in the return pipe of the heat consumption circuit in the region directly before the introduction into the heat accumulator is reduced so far that a value of 0.1 m/sec is not exceeded.

2. Process according to claim 1, characterised in that the quantity of heating medium of the heat consumption circuit is limited to a maximum of 10% of the quantity of heating medium of the heat accumulator.

3. Process according to one of claims 1–2, characterised in that the heat accumulator is operated in the range of a maximum temperature of about 85 degrees C and a base temperature of about 60 degrees C.

4. Process according to one of claims 1–3, characterised in that the temperature difference between the flow pipe and return pipe of the heat consumption circuit is kept to at least 30 K.

5. Process according to one of claims 1–4, characterised in that the temperature difference between the return pipe and flow pipe of the heating circuit is limited to at most 10 K.

6. Process according to one of claims 1–5, characterised in that the rate of flow of the heat consumption circuit before introduction into the heat accumulator is limited to at most 0.05 m/sec.

7. Upright, heat-insulated heat accumulator for a heating installation for performing the process according to claim 1, which has in its upper half a connection branch (5) for a return pipe of a heating circuit and a connection branch (6) for a flow pipe line of a heat consumption circuit, and also in the lower half a connection branch (4) for the flow pipe line of the heating circuit and a connection branch (7) for the return pipe line of the heat consumption circuit, with the heating circuit and the heat consumption circuit being open to each other in the heat accumulator, and which is equipped with at least one temperature sensor, characterised in that its height is at least as great as its characteristic transverse dimension (e.g. diameter diagonal), that the connection branch (7) for the return pipe of the heat consumption circuit has in the region (9) of entry into the heat accumulator (1) an area of cross-section which is at least 15 times as great as the entry of the connection branch, with the cross-section widening (8) in diffusor-like manner before entry into the heat accumulator (1), that the heat insulation (3) of the heat accumulator (1) is designed so that the losses due to stoppage are a maximum of 2 K per 24 h, that two thermostats (11, 12) are provided, with one (11) being located in the upper third of the heat accumulator (1) and causing the heating circuit to be switched on when a minimum permissible temperature of the heating medium occurs, and the other (12) being located in the lower third of the heat accumulator (1) and causing the heating circuit to be switched off when a maximum permissible temperature of the heating medium is reached.

8. Heat accumulator according to claim 7, characterised in that the mouth (10) of the connection branch (7) is slanted in such a manner that the upper region (13) of the casing of the connection branch (7) for the return pipe of the heat consumption circuit protrudes further into the interior of the heat accumulator (1) than the lower one.

9. Heat accumulator according to one of claims 7 or 8, characterised in that the connection branch (7) for the return pipe of the heat consumption circuit opens into the heat accumulator (1) approximately in a horizontal direction.

10. Heat accumulator according to one of claims 7–9, characterised in that a water-permeable device (14) designed as a perforated plate or baffle plate for calming the flow is provided in the lower region of the heat accumulator (1) above the mouth of the connection branch (7) for the return pipe of the heat consumption circuit.

11. Heat accumulator according to one of claims 7–10, characterised in that the flow pipe branch (4) for the heating circuit is located in the vicinity of the lowermost point of the heat accumulator (1).

12. Heat accumulator according to one of claims 7–11, characterised in that the flow pipe branch (6) for the heat consumption circuit is located in the vicinity of the highest point of the heat accumulator (1).

13. Heat accumulator according to one of claims 10–12, characterised in that the switch-off thermostat (12) is located directly above the flow calming device (14).

14. Heat accumulator according to one of claims 7–13, characterised in that the return pipe (5) of the heating circuit opens into the heat accumulator (1) at a height of 75–90% of the height of the heat accumulator (1).

15. Heat accumulator according to one of claims 7–14, characterised in that the switch-on thermostat (11) is located at a height of 75–90% of the height of the heat accumulator (1).

16. Heat accumulator according to one of claims 7–15, characterised in that it is designed as a container (2) which is substantially cylindrical on the outside.

17. Heat accumulator according to one of claims 10–16, characterised in that the flow calming device (14) is formed by baffle plates extending in a spiral, concentrically (15) or in chordlike manner (16), when viewed in the axial cross-section of the heat accumulator (1).

**Revendications**

1. Procédé pour l'exploitation d'une installation de chauffage, comportant un circuit de chauffage pour un milieu de chauffage liquide, en particulier de l'eau, dont l'aller dans la zone inférieure et le retour dans la zone supérieure d'un accumulateur de chaleur vertical sont reliés, et comportant un circuit de consommation de chaleur pour le milieu de chauffage, dont l'aller dans la zone supérieure et le retour dans la zone inférieure de l'accumulateur de chaleur sont reliés, le circuit de chauffage et le circuit de consommation de chaleur étant ouverts l'un par rapport à l'autre dans l'accumulateur de chaleur et le chauffage du milieu de chauffage, qui est limité à une température maximale au-dessous du point d'ébullition, ayant lieu dans des intervalles en étant commandé selon sa température et, en dehors des intervalles de chauffage, une stratification de températures est maintenue à l'intérieur de l'accumulateur de chaleur, caractérisé en ce que la quantité du milieu de chauffage circulant dans le circuit de consommation de chaleur (contenu des conduits et des corps de chauffage) est limitée au maximum à 20% de la quantité du milieu de chauffage se trouvant dans l'accumulateur de chaleur, et en ce que le milieu de chauffage, dans la zone de la couche de température la plus chaude, est refroidi pas en dessous d'environ 50°C (température de base), en ce que, dans le circuit de consommation de chaleur, la différence entre la température d'aller du milieu de chauffage chaud sortant de l'accumulateur de chaleur et la température de retour du milieu de chauffage refroidi reconduit dans l'accumulateur de chaleur est maintenue à au moins 20°K, en ce que, dans le circuit de chauffage, la différence entre la température de retour du milieu de chauffage réchauffé, entrant dans l'accumulateur de chaleur et la température d'aller du milieu de chauffage refroidi sortant de l'accumulateur de chaleur est limitée au plus à 20°K, et en ce que la vitesse d'écoulement du milieu de chauffage dans la partie de retour du circuit de consommation de chaleur dans la zone directement avant l'introduction dans l'accumulateur de chaleur est réduite de sorte qu'une valeur de 0,1 m/s n'est pas dépassée.

2. Procédé selon la revendication 1, caractérisé en ce que la quantité du milieu de chauffage du circuit de consommation de chaleur est limitée au maximum à 10% de la quantité du milieu de chauffage de l'accumulateur de chaleur.

3. Procédé selon une des revendications 1 ou 2, caractérisé en ce que l'accumulateur de chaleur est exploité dans la zone d'une température maximale d'environ 85°C et d'une température de base d'environ 60°C.

4. Procédé selon une des revendications 1 à 3, caractérisé en ce que la différence de température entre l'aller et le retour du circuit de consommation de chaleur est maintenue à au moins 30°K.

5. Procédé selon une des revendications 1 à 4, caractérisé en ce que la différence de température entre le retour et l'aller du circuit de chauffage est limitée à au plus 10°K.

6. Procédé selon une des revendications 1 à 5, caractérisé en ce que la vitesse d'écoulement du circuit de consommation de chaleur avant l'introduction dans l'accumulateur de chaleur est limitée à au plus 0,05 m/s.

7. Accumulateur de chaleur vertical, isolé thermiquement, pour une installation de chauffage pour la mise en oeuvre du procédé selon la revendication 1, qui présente, dans la moitié supérieure, un raccord (5) pour un conduit de retour d'un circuit de chauffage et un raccord (6) pour un conduit d'aller d'un circuit de consommation de chaleur, ainsi que, dans la moitié inférieure, un raccord (4) pour le conduit d'aller du circuit de chauffage et un raccord (7) pour le conduit de retour du circuit de consommation de chaleur, le circuit de chauffage et le circuit de consommation de chaleur étant ouverts l'un par rapport à l'autre dans l'accumulateur de chaleur, et qui est équipé d'au moins un capteur de température, caractérisé en ce que sa hauteur est au moins aussi grande que sa dimension transversale caractéristique (par exemple, diamètre, diagonale), en ce que le raccord (7) pour le retour du circuit de consommation de chaleur, dans la zone (9) de l'entrée dans l'accumulateur de chaleur (1), présente une surface en section transversale au moins 15 fois plus grande que l'entrée du raccord, la section transversale s'élargissant (8) à la façon d'un diffuseur avant l'entrée dans l'accumulateur de chaleur (1), en ce que l'isolation thermique (3) de l'accumulateur de chaleur (1) est choisie de sorte que les pertes à l'arrêt s'élèvent au maximum à 2°K par 24 h, en ce que deux thermostats (11, 12) sont prévus, l'un (11) étant agencé dans le tiers supérieur de l'accumulateur de chaleur (1) et entraînant la mise en route du circuit de chauffage lorsque la température du milieu de chauffage est la plus basse admissible, et l'autre (12) étant agencé dans le tiers inférieur de l'accumulateur de chaleur (1) et entraînant l'arrêt du circuit de chauffage lorsque la température du milieu de chauffage atteint la température maximale permise.

8. Accumulateur de chaleur selon la revendication 7, caractérisé en ce que l'embouchure (10) du raccord (7) est chanfreinée de façon que la zone supérieure (13) de l'enveloppe du raccord (7) pour le retour du circuit de consommation de chaleur s'étend plus loin à l'intérieur de l'accumulateur de chaleur (1) que la zone inférieure.

9. Accumulateur de chaleur selon une des revendications 7 ou 8, caractérisé en ce que le raccord (7) pour le retour du circuit de consommation de chaleur débouche approximativement en direction horizontale dans l'accumulateur de chaleur (1).

10. Accumulateur de chaleur selon une des revendications 7 à 9, caractérisé en ce que, dans la zone inférieure de l'accumulateur de chaleur (1) au-dessus de l'embouchure du raccord (7) pour le retour du circuit de consommation de chaleur, est prévu un dispositif (14) perméable à l'eau réalisé sous forme de fond perforé ou fond à chicanes pour stabiliser l'écoulement.

11. Accumulateur de chaleur selon une des revendications 7 à 10, caractérisé en ce que le raccord d'aller (4) pour le circuit de chauffage est agencé à proximité du point le plus profond de l'accumulateur de chaleur (1).

12. Accumulateur de chaleur selon une des revendications 7 à 11, caractérisé en ce que le raccord d'aller (6) pour le circuit de consommation de chaleur est agencé à proximité du point le plus élevé de l'accumulateur de chaleur (1).

13. Accumulateur de chaleur selon une des revendications 10 à 12, caractérisé en ce que le thermostat d'arrêt (12) est agencé directement au-dessus du dispositif (14) de stabilisation de l'écoulement.

14. Accumulateur de chaleur selon une des revendications 7 à 13, caractérisé en ce que le retour (5) du circuit de chauffage débouche dans l'accumulateur de chaleur (1) à une hauteur de 75 à 90% de la hauteur de l'accumulateur de chaleur (1).

15. Accumulateur de chaleur selon une des revendications 7 à 14, caractérisé en ce que le thermostat de mise en route (11) est agencé à une hauteur de 75 à 90% de la hauteur de l'accumulateur de chaleur (1).

16. Accumulateur de chaleur selon une des revendications 7 à 15, caractérisé en ce qu'il est réalisé en tant que récipient (2) généralement cyclindrique à l'extérieur.

17. Accumulateur de chaleur selon une des revendications 10 à 16, caractérisé en ce que le dispositif (14) de stabilisation de l'écoulement est formé de chicanes s'étendant concentriquement (15) ou selon des cordes (16), ou en forme de spirale, en coupe transversale axiale de l'accumulateur de chaleur (1).

## Fig. 1

## Fig. 2